# EUROPEAN PATENT APPLICATION

(11) **EP 3 972 393 A1**
(43) Date of publication of application: **23.03.2022**
(21) Application number: 20196805.4
(22) Date of filing: 18.09.2020
(51) Int. Cl.: H05H 1/46, C02F 1/30

(54) **DEVICE AND SYSTEM FOR TREATING A LIQUID BY PLASMA AND METHODS FOR TREATING A LIQUID BY PLASMA**

(71) Applicant: Leibniz-Institut für Plasmaforschung und Technologie e.V., 17489 Greifswald (DE); PRE Power, Recycling, Energyservice GmbH, 17217 Penzlin (DE)
(72) Inventor: Honnorat, Bruno, 17489 Greifswald (DE); Brüser, Volker, 17489 Greifswald (DE); Kolb, Jürgen, 17498 Hinrichshagen (DE); Schulz, Tilo, 17121 Loitz (DE); Rataj, Raphael, 17489 Greifswald (DE); Rossow, Norbert, 17033 Neubrandenburg (DE)
(74) Representative: Schulz Junghans Patentanwälte PartGmbB

(57) **Abstract**

The invention relates to a device (1) for treating a liquid by plasma (4), comprising at least one compartment (2) to be at least partially filled with a liquid (33) and at least one transmission element (7) reaching the compartment (2), wherein the transmission element (7) is adapted to transmit a microwave (60) to the liquid (33) contained in the compartment (2) such that the liquid (33) contained in the compartment (2) is at least partially vaporized and plasma (4) is ignited in the vapor (11) and wherein the compartment (2) comprises at least one opening (15) which is able to realize a flow connection (3) to the surroundings, such that plasma (4) can at least partially be emitted from the compartment (2) to the surroundings.

The invention further relates to a method for treating a liquid by plasma (4) with the device (1) and a system (20) comprising the device (1) and a reactor (30), as well as a method of treating a liquid by the system (20).

## Description

### Specification

The treatment of liquids with physical and/or chemical methods to change its physical and/or chemical parameters or characteristics plays an important role in many fields. One example is biogas production. It is for example known that treating fermentation residues by ultrasonic sound to break down plant fibers can improve the efficiency of the fermentation process. From experiments it can be assumed that treating biomass by plasma can lead to a further increase in efficiency. Treating liquids by plasma is in general known from literature.

The work described in Nomura et al. (2008), Hattori et al. (2010) and Hattori et al. (2012) shows techniques and devices that use a coupler for the ignition of a plasma to discharge in a liquid contained in a batch reactor. In these techniques a microwave is transmitted from the inner part of a microwave waveguide to a reactor vessel, where the plasma is ignited by an electrode that ends in a batch reaction chamber. These couplers comprise an inner electrode and an outer electrode separated by a material permeable to microwaves like polytetrafluorethylene. The plasma is generated directly in the liquid to be treated by the plasma. The electrodes used in the examples given by Hattori et al. (2012) is coated with alumina or placed inside a ceramic tube.

There are also systems known with a quartz plate located in front of a microwave slit antenna. This is shown by the work of Ishijima et al. (2010). The quartz plate here helps to promote the formation of gas bubbles and confine them near the area where the microwave is decoupled.

Another technique, shown by Wright et al. (2018), treats biomass in a batch mode by the use of plasma microbubbles formed by a nickel membrane, through which a gas flow produces microbubbles, and alumina-coated electrodes.

Paudle et al. (2017) used a treatment by pulsed electrical fields to change chemical and physical properties like surface area and permeability of recalcitrant wastewater, biomass and biosolids using high-intensity external electric fields.

US 2008/0006536 A1 shows a method in which atmospheric plasma is used to improve the extraction of sugar from cellulosic material. Plasma treatment can be used as a pretreatment. For this purpose, US 2008/0006536 A1 shows a device or system for treating biomass with a plasma reactor. The liquid or biomass to be treated flows through the reactor, which comprises a reaction chamber made of a suitable insulating material. Two electrodes for generating the plasma are placed with a distance from each other around the outer surface of the housing of the reactor chamber. A working gas suitable for generating atmospheric plasma is introduced into the reaction chamber.

An objective of the present invention is to provide a device, a system and a method for an efficient treatment of a liquid by plasma.

The objective is achieved by a device for treating a liquid by plasma having the features of claim 1, a method for treating a liquid by the device with the features of claim 6, as well as by a system having the features of claim 10 and a method for treating a liquid by the system with the features of claim 14.

Advantageous embodiments are described in the subclaims.

A first aspect of the invention is related to a device for treating a liquid by plasma, comprising at least one compartment to be at least partially filled with a liquid and at least one transmission element reaching the compartment. The transmission element is adapted to transmit a microwave to the liquid contained in the compartment such that the liquid contained in the compartment is at least partially vaporized and plasma is ignited in the vapor and wherein the compartment comprises at least one opening which is able to realize a flow connection to the surroundings, such that plasma can at least partially be emitted from the compartment to the surroundings.

The liquid according to the invention to be treated by plasma is typically but not necessarily water-based. It is not excluded that the liquid is a mixture of different substances also including solid and/or gaseous components.

The device comprises a compartment that can at least partially be filled with a liquid. A transmission element is reaching up to or even into the compartment such that a microwave or at least the energy of a microwave transmitted by the transmission element can be coupled into the compartment or in particular into the liquid contained in the compartment. Therefore, the transmission element extends into the compartment and contacts the liquid contained in the compartment.

In particular, a coupling end of the transmission element faces the compartment and is preferred to at least contact the volume of the compartment or lead into this volume such that a contact between the liquid contained in the compartment and the transmission element is realizable and the energy of the microwave is directly transferrable to the liquid.

In a special embodiment the device comprises more than one, in particular at least four transmission elements, thus more energy of the microwave can be transmitted to the liquid.

The compartment is adapted to at least partially confine the decoupled microwave which means that energy of the microwave is essentially absorbed in the compartment by the liquid contained in the compartment. The compartment is therefore placed into a compartment housing, such that the microwave or the energy of the microwave is coupled essentially only into the volume inside of the compartment.

The liquid is at least partially vaporized which means that the energy of the microwaves is at least partially transferred to the molecules, in particular the water molecules of the liquid, such that at least parts of the molecules are transferred to the gas phase and vapor is formed inside the compartment.

A plasma according to the invention is a gas of ions, free electrons and/or radicals. In general plasma can be generated by coupling energy into an essentially neutral gas or vapor. One possibility is to expose the neutral gas to heat. Another possibility is subjecting a neutral gas to a strong electromagnetic field. According to the invention plasma is generated by transmitting the microwave energy to the at least partially vaporized liquid in the compartment. In other words, the plasma is ignited by the microwave in the vapor formed inside the compartment. Ignition occurs essentially, which means not necessarily totally, inside the compartment. It is not excluded that ignition also occurs in vapor bubbles in the surroundings, which means outside of the compartment.

The compartment comprises at least one opening which is able to realize a flow connection to the surroundings. Because of the flow connection between the compartment and the surroundings plasma can be emitted from the compartment to the surroundings, in particular plasma can be emitted to a liquid in the surroundings and can therefore interact with molecules of the liquid in the surroundings as well as with molecules of the liquid contained in the compartment. Furthermore, the opening allows liquid to stream from the compartment to the surroundings and vice versa, such that the compartment can at least partially be filled by the liquid of the surroundings. However, according to the invention, it is not excluded that the compartment can be filled with another liquid, which is not the liquid of the surrounding. It is not excluded that vapor formed inside the compartment can leave the compartment through the opening such that the plasma ignition occurs also in the surroundings.

The ions, free electrons and/or radicals of the plasma can chemically interact with molecules of the liquid contained in the compartment or with molecules of the liquid in the surroundings of the compartment, wherein the surroundings may be a volume of a reactor in or near which the device is partially placed. In particular, the plasma is able to break down large molecules and can therefore reduce physical and/or chemical properties of a liquid like for example its viscosity.

It is advantageous, however, that the compartment is filled through the opening with the liquid of the surroundings. Therefore, by the device according to the invention reactive species are produced directly from the liquid to be treated such that an addition of externally produced species is not required. Therefore, no further gas injection is needed to generate a plasma for treating a liquid and there is no need to add any other externally produced chemical.

In a special embodiment the compartment may comprise several openings to realize a flow connection such that the plasma can for example be emitted in several directions.

In one embodiment of the device according to the invention the opening is realized by at least one through hole in a bounding wall of the compartment such that plasma can at least partially be emitted through the through hole to the liquid in the surroundings and/or the liquid is able to stream into the compartment and out of the compartment.

In other words, the opening has at least two functions. The first function is that plasma that is ignited essentially inside the compartment can be emitted from the compartment such that the charged ions, radicals and/or electrons of the plasma can interact with molecules in the surroundings of the compartment. The second function is that liquid and/or vapor can stream into and out of the compartment. This ensures pressure equalization with the surroundings. Vaporized liquid in the compartment is automatically replaceable by the liquid in the surroundings.

Typically, the flow connection is realized by a through hole which is permeable for liquids and gases. The through hole can comprise a retention element which prevents the inflow and outflow of solid substances such as fibers or other typical components of biomass.

The opening may have a rectangular or elliptical, in particular a circular shape. The average diameter of a through hole acting as flow connection is typically less than 4 mm, in particular less than 3 mm.

The compartment is bound by a bounding wall of a compartment housing.

In a special embodiment the volume of the compartment surrounded by the compartment housing, and therefore the maximum amount of liquid to be contained inside the compartment, typically does not exceed 500 mm³ which means that the volume of the compartment that can be filled with liquid is relatively small. Because of the small amount of liquid that can be contained inside the compartment, only a small amount of microwave energy is needed to form vapor from the liquid in order to generate the plasma.

In another embodiment of the device according to the invention the transmission element is at least one electrode, which is at least partially made of tungsten or a tungsten alloy.

The electrode is extending through the device along a transmission direction and is adapted to transmit the microwave through the device from a coupling section of the device, in particular from a coupling end of the electrode which is adapted to couple a microwave or at least the energy of a microwave, to a coupling section of the device, in particular to a coupling end of the electrode which is adapted to couple the microwave or at least the energy of a microwave into the compartment.

In general, other types of electrodes are not excluded. Using tungsten, tungsten alloy, molybdenum, or rhenium is advantageous because of its high melting point. In a preferred embodiment the device comprises at least four tungsten electrodes. In a special embodiment a transmission element has a diameter of less than 2 mm, in particular less than 6 mm, and a length of less than 300 mm, in particular less than 86 mm, wherein the diameter is measured transverse to the transmission direction.

In case of the device comprising more than one transmission element, the transmission elements are arranged essentially in parallel to each other. In a special embodiment these transmission elements are arranged in equal distances to each other.

In another embodiment of the device according to the invention the device comprises a body element, wherein the transmission element extends at least partially through the body element.

The body element therefore covers at least partially the transmission element.

In particular the body element comprises capillary through holes that extend through the body element. The transmission element is placed inside such a capillary through hole, wherein in a special embodiment the transmission element can extend over the body element, in particular the transmission element extends over the body element in the coupling section of the device.

The device also comprises a housing, covering the body element at least partially and made of a material with a low corrosion tendency.

In another embodiment of the device according to the invention the body element is at least partially made of a refractory material, in particular a ceramic material.

In other words, the transmission element is encased by a refractory material that is resistant to decomposition by heat, pressure, or chemical attack, and retains strength and form at high temperatures. The refractory material is essentially transparent to microwave. The refractory material may be dielectric material, in particular a ceramic material, in particular an aluminum oxide, or zirconium oxide.

The device does not need a second or outer electrode to ignite the plasma in the compartment. The energy supply to generate the plasma takes place solely via the transmission element.

A second aspect of the invention is a method for treating a liquid by plasma with a device according to the invention, wherein the compartment is at least partially filled with liquid contained in the compartment and a microwave is transmitted by at least one transmission element reaching the compartment to the liquid contained in the compartment such that the liquid contained in the compartment is at least partially vaporized and plasma is ignited in the vapor wherein the plasma is at least partially emitted from the compartment by at least the one opening realizing a flow connection to the surroundings such that liquid contained in the compartment and/or liquid in the surroundings are treated by plasma.

The plasma is ignited in the vapor which means in other words that a plasma discharge occurs in the vapor.

In one embodiment of the method according to the invention the microwave has a frequency between 300 MHz and 300 GHz, in particular between 2 GHz and 4 GHz.

Therefore, the microwave with a frequency between 300 MHz and 300 GHz is the microwave to be coupled to the device.

In another embodiment of the method according to the invention the microwave is a continuous microwave.

For an optimized absorption of microwave energy the microwave may be a standing wave. A standing microwave, also known as a stationary wave, is a microwave with a peak amplitude or a maximum not moving in space, which means that the maximum of the microwave is stationary in particular with respect to the position of the device and its transmission element.

In another embodiment of the method according to the invention the microwave is a pulsed microwave.

A pulsed microwave and therefore a pulsed transmission of the microwave or at least of its energy through the device leads to the generation of a pulsed plasma in the compartment. In a special embodiment the microwave pulses have a central frequency of 2.45 GHz duration of 12.5 ms, a peak power of 2000 W, and are applied with a repetition rate of 20 Hz.

A third aspect of the invention is a system for treating a liquid by plasma comprising a device for treating a liquid by plasma according to the invention and a reactor having a reactor volume to be at least partially filled with liquid in the surroundings of the compartment of the device, wherein the compartment is at least partially arranged in or at the reactor volume, and the opening of the compartment realizes a flow connection to the reactor volume, such that plasma can at least partially be emitted through the opening from the compartment to the liquid in the surroundings with which the reactor volume is at least partially filled and/or liquid in the surroundings is able to stream from the reactor volume into the compartment and liquid is able to stream out of the compartment into the reactor volume such that liquid in the compartment and/or liquid in the surroundings with which the reactor volume is at least partially filled is treatable by plasma generated essentially in the compartment.

In other words, the system comprises a device for treating by plasma a liquid arranged inside or at a reactor volume such that at least the compartment is partially surrounded by the reactor volume. The reactor can be filled at least partially by a liquid. The device is arranged inside the reactor such that by the opening a flow connection between the volume of the compartment and the volume of the reactor is realized. The opening that realizes the flow connection allows firstly that plasma and/or vapor can be emitted from the comportment to the reactor volume. In particular the plasma can be emitted to the liquid that has been filled into the reactor. Secondly the opening allows the exchange of liquid between the compartment and the reactor volume. In particular, liquid from the reactor volume and therefore of the surroundings of the compartment of the device is able to stream inside the compartment to be vaporized and ignited there to form a plasma.

In one embodiment of the system according to the invention the main axis of extension of the transmission element is arranged essentially where the microwave, in particular the standing microwave, has a maximum.

The main axis of extension of the transmission element is the extension of the transmission element between the coupling end and the decoupling end of the transmission element.

In this embodiment the transmission element is arranged with respect to the microwave to be transmitted such that a maximum or an amplitude of the microwave is essentially aligned with the main axis of extension of the transmission element. In case of the device comprising more than one transmission element the microwave is essentially aligned with the main central axis of extension of the bundle of transmission elements. By realizing this embodiment of the invention, the energy transferred and transmitted by the transmission element to the compartment can be enlarged.

In another embodiment of the system according to the invention the reactor is a flow reactor, in particular a continuous flow reactor.

The expression "flow reactor" means that the liquid to be treated by the plasma flows in particular constantly through the reactor volume with a certain velocity. The reactor can also be used as a bypass reactor which means that it is adapted to be integrated into a bypass line of a reaction plant.

In another embodiment of the system according to the invention the system comprises a microwave generation unit.

In particular, the microwave generation unit is adapted to generate a standing, continuous or a standing pulsed microwave to be coupled into the transmission element of the device.

Furthermore, the microwave generation unit is adapted to generate a microwave with a maximum essentially aligned with the main axis of a transmission element or a bundle of transmission elements.

Typically, a microwave generation unit comprises at least a microwave generator and a waveguide transmitting the microwave. The main extension of the transmission element is essentially perpendicular to the direction of transmission of the microwave through the waveguide, such that the direction of transmission of the microwave through the waveguide is perpendicular to the direction of transmission of the microwave through the transmission element to the compartment.

To protect the microwave generator against liquid that may enter the microwave generation unit by any leakage the waveguide comprises two microwave windows, in particular made of PTFE or another material permeable to microwaves, that intersect the waveguide into three sections, wherein the coupling end of the transmission element is located within the middle section of the three sections. The elements and devices of the microwave generation unit that generate the microwave are located at or in the other two sections.

Furthermore, the system is protected against liquid leakage by a sealed mechanical connection between the device and the reactor.

A fourth aspect of the invention is a method of treating a liquid by a system according to the invention, wherein the reactor volume is at least partially filled with liquid in the surroundings of the compartment of the device of the system. From the compartment that is at least partially arranged in or at the reactor volume, plasma is at least partially emitted to the liquid in the surroundings with which the reactor volume is at least partially filled by the at least one opening and/or liquid in the surroundings of the compartment of the device of the system is streaming from the reactor volume into the compartment and/or liquid in the compartment is streaming out of the compartment into the reactor volume by the at least one opening such that liquid in the compartment and/or liquid in the surroundings with which the reactor volume is at least partially filled is treated by plasma.

In one embodiment of the method of treating a liquid by the system according the invention the plasma is emitted from the compartment essentially along the direction along which the liquid in the surroundings flows through the reactor volume.

This means that the direction of the emission of the plasma from the compartment is essentially the same as the direction of the flow inside the reactor volume. Furthermore, the opening that realizes the flow connection between the compartment and the reactor volume is arranged essentially at the same height or plane as the outlet of the reactor through which the liquid in the surroundings leaves the reactor.

By an arrangement of the device inside the reactor volume according to this embodiment of the invention a good distribution of the plasma in the streaming liquid in the surroundings is achievable such that the reactive species of the plasma are spread widely and are used efficiently to chemically interact with the molecules und/or substances of the liquid to be treated by the plasma.

To reduce the velocity of the liquid streaming through the reactor the reactor may have an increased cross-sectional area in the reactor section where the device is arranged.

Exemplary embodiments of the invention are shown in the figures.

It is shown in
- Fig. 1: a schematic cross-section of a device for treating a liquid by plasma; and
- Fig. 2: a schematic cross-section of a system for treating a liquid by plasma.

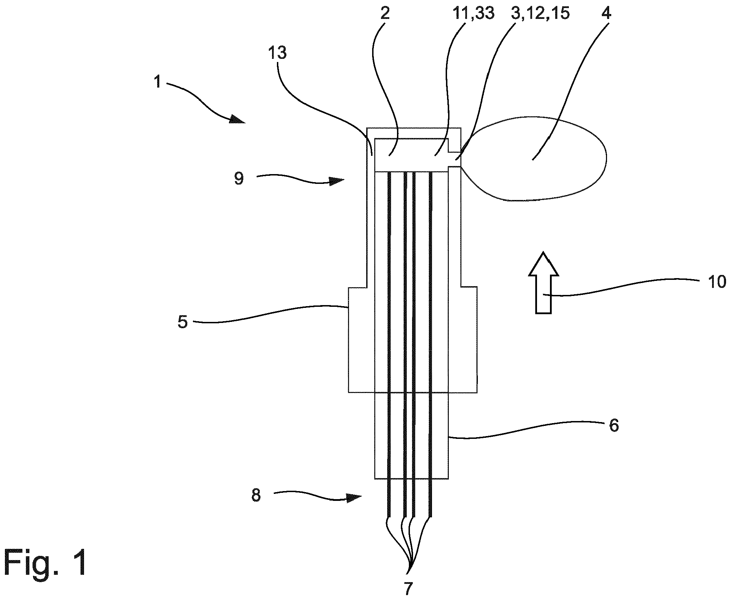

In Figure 1, a cross-section through a device 1 according to the invention is shown. The device 1 comprises four transmission elements 7 extending through a body element 6. According to Figure 1 the device 1 comprises at its lower end a coupling section 8 adapted to couple a microwave into the transmission elements 7 of the device 1. In the embodiment shown in Figure 1 the transmission elements 7 exceed over the body element 6 in the coupling section 8. The body element 6 is made of a refractory material, in particular a ceramic material. The transmission elements 7 are adapted to transmit microwaves, or at least the energy of microwaves, through the device 1 from the coupling section 8 to the decoupling section 9 in the direction of transmission 10 through the device 1. The transmission elements 7 are in this embodiment tungsten electrodes. It can be seen that in the decoupling section 9 the transmission elements 7 reach a compartment 2. The compartment 2 is at least partially filled with a liquid 33. The energy of the microwave is decoupled into the compartment 2, and therefore into the liquid 33 in the compartment 2, and thus the liquid 33 is at least partially vaporized so that a vapor 11 is formed. Further decoupling of the microwave energy generates a plasma 4. By an opening 15 - in the given example a through hole 12 in the bounding wall 13 of the compartment 2 - realizing a flow connection 3, the plasma 4 can be emitted to the surroundings of the device 1. The bounding wall 13 is here part of the device housing 5. In particular, the plasma 4 to be generated by the device 1 is a pulsed plasma with a pulse duration of several milliseconds.

The plasma 4 is generated by the microwaves transmitted by transmission elements 7. First, the radiation energy of the microwave heats up the water such that bubbles of vapor 11 are formed. The plasma 4 is then ignited in these bubbles of vapor 11. The microwave energy is also needed for maintaining the plasma 4, in particular the pulsed plasma 4. Excited and ionized atoms, molecules and radicals, like aggressive OH radicals, are then formed in the plasma 4. These molecules are intended to chemically change or break down molecules of the liquid.

It can be seen in Figure 1 that the volume of the compartment 2 is relatively small and contains only a small amount of liquid 33 to be vaporized. Therefore, a relatively small amount of microwave energy is needed to emit plasma 4 to the surroundings of the device 1.

The compartment 2 with the flow connection 3 ensures that the formed vapor 11 is not carried away by a streaming liquid in the surroundings of the device 1 when it is arranged in a flow reactor. The vapor 11 is first formed inside the compartment 2. The plasma 4 then expands with the bubbles of vapor 11 and shoots out of the flow connection 3 in pulses. The compartment 2 protects the bubbles of vapor 11, such that they do not have to be constantly formed again and the energy needed is low.

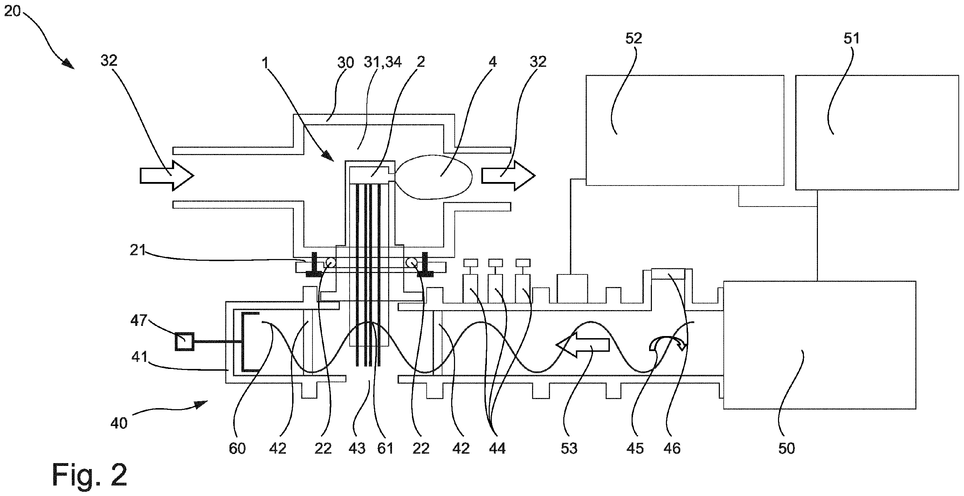

Figure 2 shows a system 20 to treat a liquid 33 in the compartment 2 and/or liquid 34 in the surroundings by plasma 4. The system 20 comprises a device 1 as shown in Figure 1. The upper part of the device 1 comprising the compartment 2 is arranged inside a reactor volume 31. The reactor 30 in the given example is a continuous flow reactor. The reactor 30 is adapted to be used as an in-line reactor, which includes that it can also be used in a bypass line. The direction of flow 32 of the liquid 34 in the surroundings through the reactor volume 31 is according to Figure 2 from left to right. It can be seen that the device 1 is arranged inside the reactor volume 31 such that the plasma 4 is emitted in the direction of flow 32 of the liquid 34 in the surroundings through the reactor volume 31.

The reactor 30 and the device 1 are mechanically connected by a mechanical connection 21. As indicated in Figure 2 the mechanical connection 21 is realized by screws, which is only one of various options for realizing the mechanical connection 21. For the purpose of protection against leakage of the liquid 34 a sealing 22 is provided.

The system 20 shown in Figure 2 also comprises a microwave generator unit 40. The microwave generator unit 40 shown here is adapted to produce a standing microwave 60.

Furthermore, the device 1 and the microwave generator unit 40 are arranged in such a way that a maximum 61 of the standing microwave 60 is aligned with the main extension axis of the device 1 and therefore essentially with the central main extension axis of the bundle of transmission elements such that the energy transmittable by the transmission elements is maximized.

The microwave generation unit 40 comprises a microwave generator 50, which is for example a magnetron, and a housing 41 which acts as a microwave waveguide and into which the generated microwave 60 is emitted in the direction of microwave transmission 53. The housing 41 is typically but not necessarily a hollow metallic body made of brass with a rectangular profile. The other components of the microwave generation unit 40 are coupled to the housing 41.

To protect the microwave generator 50 from reflected microwave power, the microwave generation unit 40 comprises a circulator 45, indicated here as a curved arrow, that dissipates returning waves into a water load 46, which acts as a sump.

Stub tuners 44 take care of the matching between microwave generator 50 and plasma 4. In a stub tuner 44, metallic pins are inserted into the housing 41 where they short-circuit the field. This allows to modulate the shape of the microwave 60 and to maximize the energy such that a maximum 61 of the standing microwave 60 is aligned with the main extension axis of the device 1 or in particular the transmission elements.

The reflector 47 can be moved relatively to the housing 41 to maximize the energy of the microwave 60.

Furthermore, the microwave generation unit 40 comprises a function generator 51 and an oscilloscope 52 for controlling and measuring in particular the reflected energy.

The device 1, and in particular the coupling section, extends into the waveguide formed by the housing 41 of the microwave generation unit 40 into a section of the housing 41 that is bordered by two PTFE windows 42 to protect the microwave generator 50 and other components from any liquid leakage. On the opposite side of the device 1 the housing 41 has an opening 43 to protect the microwave circuit, in case of leakage of the treated liquid.

### Experiments

Experiments have shown that the viscosity of a sodium carboxymethyl cellulose solution as model substance for liquid biomass is reducible from approximately 80 mPa.s to approximately 40 mPa.s within 30 minutes of using the method of treating a liquid by a system 20 according to the invention and to approximately 20 mPa.s within 70 minutes.

### Literature

Nomura et al.: Appl. Phys. Express 1 (2008) 046002
Hattori et al.: J. App. Phys. 107 (2010), 063305
Hattori et al.: Surface & Coatings Technology 206 (2012) 2140-2145
Ishijima et al.: Plasma Source Sci. Technol. 19 (2010) 015010
Wright et al.: AlChE Journal 64 (11) (2018) 3803-3816
Paudel et al.: Bioresource Technology 245 A (2017) 1194-1205

### List of reference numerals

- 1: device
- 2: compartment
- 3: flow connection
- 4: plasma
- 5: device housing
- 6: body element
- 7: transmission element
- 8: coupling section
- 9: decoupling section
- 10: direction of transmission
- 11: vapor
- 12: through hole
- 13: bounding wall
- 15: opening
- 20: system
- 21: mechanical connection
- 22: sealing
- 30: reactor
- 31: reactor volume
- 32: direction of flow
- 33: liquid in the compartment
- 34: liquid in the surroundings
- 40: microwave generation unit
- 41: housing
- 42: PTFE window
- 43: opening
- 44: stub tuner
- 45: circulator
- 46: water load
- 47: reflector
- 50: microwave generator
- 51: function generator
- 52: oscilloscope
- 53: direction of microwave transmission
- 60: microwave
- 61: maximum

## Claims

1. Device (1) for treating a liquid by plasma (4), comprising at least one compartment (2) to be at least partially filled with a liquid (33) and at least one transmission element (7) reaching the compartment (2), wherein the transmission element (7) is adapted to transmit the microwave energy (60) to the liquid (33) contained in the compartment (2) such that the liquid (33) contained in the compartment is at least partially vaporized and plasma (4) is ignited in the vapor (11), and wherein the compartment (2) comprises at least one opening (15) which is able to realize a flow connection (3) to the surroundings, such that plasma (4) can at least partially be emitted from the compartment (2) to the surroundings.

2. Device (1) according to claim 1, wherein the opening (15) is realized by at least one through hole (12) in a bounding wall (13) of the compartment (2) such that plasma (4) can at least partially be emitted by the through hole (12) to the liquid (34) in the surroundings and/or liquid is able to stream into the compartment (2) and out of the compartment (2).

3. Device (1) according to one of the preceding claims, wherein the transmission element (7) is at least one electrode at least partially made of tungsten or a tungsten alloy.

4. Device (1) according to one of the preceding claims, wherein the device (1) comprises a body element (6), wherein the transmission element (7) extends at least partially through the body element (6).

5. Device (1) according to claim 4, wherein the body element (6) is at least partially made of a refractory material, in particular a ceramic material.

6. Method for treating a liquid by plasma (4) with a device (1) according to at least one of the claims 1-5, wherein the compartment (2) is at least partially filled with liquid (33) and a microwave (60) is transmitted by at least one transmission element (7) reaching the compartment (2) to the liquid (33) contained in the compartment (2) such that the liquid (33) contained in the compartment (2) is at least partially vaporized and plasma (4) is ignited in the vapor (11) wherein the plasma (4) is at least partially emitted from the compartment (2) by the at least one opening (15) realizing a flow connection (3) to the surroundings such that liquid (33) contained in the compartment (2) and/or liquid (34) in the surroundings are treated by plasma (4).

7. Method according to claim 6, wherein the microwave (60) has a frequency between 300 MHz and 300 GHz, in particular between 2 GHz and 4 GHz.

8. Method according to claim 6 or 7, wherein the microwave (60) is a continuous microwave.

9. Method according to one of the claims 6 - 7, wherein the microwave (60) is a pulsed microwave.

10. System (20) for treating a liquid by plasma (4) comprising a device (1) for treating a liquid by plasma (4) according to at least one of the claims 1-5 and a reactor (30) having a reactor volume (31) to be at least partially filled with liquid (34) in the surroundings of the compartment (2) of the device (1), wherein the compartment (2) is at least partially arranged in or at the reactor volume (31), and the opening (15) of the compartment (2) realizes a flow connection (3) to the reactor volume (31), such that plasma (4) can at least partially be emitted by the opening (15) from the compartment (2) to the liquid (34) in the surroundings with which the reactor volume (31) is at least partially filled and/or liquid (34) in the surroundings is able to stream from the reactor volume (31) into the compartment (2) and liquid is able to stream out of the compartment (2) into the reactor volume (31) such that liquid (33) in the compartment (2) and/ or liquid (34) in the surroundings with which the reactor volume (31) is at least partially filled is treatable by plasma (4) generated essentially in the compartment (2).

11. System (20) according to claim 10, wherein the main axis of extension of the transmission element (7) is arranged essentially where the microwave (60), in particular the standing microwave, has a maximum (61).

12. System (20) according to one of the claims 10-11, wherein the reactor (30) is a flow reactor, in particular a continuous flow reactor.

13. System (20) according to one of the claims 10-12, wherein the system (20) comprises a microwave generation unit (40).

14. Method of treating a liquid by a system (20) according to one of the claims 10- 13, wherein
- the reactor volume (31) is at least partially filled with liquid (34) in the surroundings of the compartment (2) of the device (1) of the system (20), and
- plasma (4) is at least partially emitted from the compartment (2), that is at least partially arranged in or at the reactor volume (31), to the liquid (34) in the surroundings with which the reactor volume (31) is at least partially filled by the at least one opening (15) and/or
- liquid (34) in the surroundings of the compartment (2) of the device (1) of the system (20) is streaming from the reactor volume (31) into the compartment (2) and/ or liquid (33) in the compartment (2) is streaming out of the compartment (2) into the reactor volume (31) by the at least one opening (15), such that liquid (33) in the compartment (2) and/or liquid (34) in the surroundings with which the reactor volume (31) is at least partially filled is treated by plasma (4).

15. Method of treating a liquid according to claim 14, wherein the plasma (4) is emitted from the compartment (2) essentially along the flow direction of the liquid (34) in the surroundings through the reactor volume (31).
